# EUROPÄISCHE PATENTANMELDUNG

(11) **EP 2 143 912 A1**
(43) Veröffentlichungstag der Anmeldung: **13.01.2010**
(21) Anmeldenummer: 09007628.2
(22) Anmeldetag: 09.06.2009
(51) Int. Cl.: F02C 7/36

(54) **Gasturbine mit zumindest einer mehrstufigen, mehrere Verdichtermodule umfassenden Verdichtereinheit**

(30) Priorität: 07.07.2008 DE 102008031932
(71) Anmelder: Rolls-Royce Deutschland Ltd & Co KG, 15827 Blankenfelde-Mahlow (DE)
(72) Erfinder: Talan, Metin, Dr., 10967 Berlin (DE)
(74) Vertreter: Weber, Joachim

(57) **Zusammenfassung**

Die Erfindung bezieht sich auf eine Gasturbine mit zumindest einer mehrstufigen Verdichtereinheit 2, wobei die Verdichtereinheit 2 aus einzelnen, unabhängigen Verdichtermodulen 3-5 aufgebaut ist, welche unabhängig voneinander drehbar auf einer Antriebswelle 1 gelagert sind und jeweils mittels eines variablen Getriebes 9-11 mit der Antriebswelle 1 gekoppelt ist.

## Beschreibung

Die Erfindung bezieht sich auf eine Gasturbine mit zumindest einer mehrstufigen Verdichtereinheit.

Bei mehrstufigen Verdichtern, z.B. mehrstufigen Hochdruckverdichtern von Flugtriebwerken, werden alle Verdichterstufen zusammengehörend für die Hochlast ausgelegt. Beim Betrieb dieser Verdichter ist neben der Hochlast jedoch auch Teillast bzw. Leerlaufbetrieb verlangt, die durch deutlich niedrigere Verdichtungsverhältnisse gekennzeichnet sind.

Die mehreren Verdichterstufen werden nur für hohe Verdichtungsverhältnisse bei Hochlasten zusammengehörend ausgelegt und sind untrennbar.

### Der Teillast- bzw. der Leerlaufbetrieb werden somit sehr eingeschränkt:

Das geforderte, niedrige Verdichtungsverhältnis bei Teillast bzw. Leerlauf wird auf alle Stufen verteilt. Jede Stufe selbst muss daher ein sehr geringes Verdichtungsverhältnis leisten. Dies kann im Betrieb nicht realisiert werden, weil einige Stufen sehr nahe an ihre eigenen, kritischen und zu vermeidenden Pumpgrenzen kommen und somit den ganzen Verdichter und folglich z.B. das ganze Triebwerk gefährden.

Als Gegenmaßnahme dazu wird der Verdichter im Teillast bzw. Leerlauf zwangsweise bei höheren Verdichtungsverhältnissen betrieben. Dadurch wird unnötig Leistung und damit z.B. auch unnötig Treibstoff verbraucht. Folglich ist der Verdichter im Teillast- bzw. Leerlaufbetrieb, die z.B. bei einem Triebwerk einen hohen zeitlichen Anteil an der Gesamtbetriebsdauer bilden können, wesentlich unwirtschaftlich.

Der Erfindung liegt die Aufgabe zugrunde, eine Gasturbine mit zumindest einer mehrstufigen Verdichtereinheit zu schaffen, welche bei einfachem Aufbau und einfacher, betriebssicherer Wirkungsweise unterschiedlichen Lastbedingungen angepasst werden kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit eine Gasturbine mit zumindest einer mehrstufigen Verdichtereinheit vorgesehen, bei welcher die Verdichtereinheit aus einzelnen, unabhängigen Verdichtermodulen aufgebaut ist, welche unabhängig voneinander drehbar auf einer Antriebswelle gelagert sind und welche jeweils mittels eines variablen Getriebes mit der Antriebswelle 1 gekoppelt ist. Das variable Getriebe weist ein variabel verstellbares Übersetzungsverhältnis bzw. Untersetzungsverhältnis. Ein derartiges Getriebe kann beispielsweise in Form eines Kettenscheibengetriebes mit Verstellkonussen oder in Form eines Planetengetriebes oder in sonstiger Weise aufgebaut sein.

Erfindungsgemäß weist das Getriebe somit unterschiedliche Übersetzungsverhältnisse bzw. Untersetzungsverhältnisse (verglichen mit den anderen Getrieben) auf, so dass eine prozentuale Verteilung der Lasten durch eine unterschiedliche Drehzahlverteilung der Relativdrehzahlen zwischen der Antriebswelle und den einzelnen Verdichtermodulen möglich ist. Hierdurch ergibt sich eine Optimierung des Wirkungsgrades.

Erfindungsgemäß werden die Verdichtermodule mit variablen Getrieben (mit variablen Drehzahl- bzw. Übersetzungsverhältnissen) versehen. Somit können deren individuelle Übersetzungen je nach Bedarf eingestellt werden (über die Systemsteuerung). Prinzipiell gibt es für jedes der variablen Getriebe drei Hauptmöglichkeiten, die fließend bzw. kontinuierlich ineinander übergehen:
1. Die Übersetzung kann bei Bedarf so eingestellt werden, dass Leistung von der Antriebswelle auf das Verdichtermodul übertragen wird. Dabei kann das Übersetzungsverhältnis so eingestellt werden, dass das entsprechende Verdichtermodul mit den - für die umfassten Verdichterstufen - optimalen Drehzahlen betrieben wird. Dadurch kann der Wirkungsgrad dieses Verdichtermoduls und damit des Gesamtverdichters erheblich erhöht werden. Insgesamt resultiert dies z.B. in einer signifikanten Treibstoffeinsparung, was wiederum zu einer besseren Wirtschaftlichkeit z.B. des Triebwerksbetriebs führt.
2. Die Übersetzung kann bei Bedarf auch so eingestellt werden, dass Leistung von dem Verdichtermodul, welches durch den Luftzug angetrieben wird, auf die Antriebswelle übertragen wird. Bei bestimmten Betriebsbedingungen würde dies zu einer optimalen Verteilung/Nutzung der beschränkt vorhandenen Gesamtleistung führen, welches die Systemeffizienz und dadurch die Wirtschaftlichkeit des Systems erhöht.
3. Die Übersetzung kann bei Bedarf auch so eingestellt werden, dass gar keine Leistung übertragen wird (weder in die eine noch in die andere Richtung). Dies entspricht dem entkoppelten Zustand dieses Verdichtermoduls.

Jedes der variablen Getriebe ist je nach Bedarf durch die Kontrolleinheit einzustellen, nämlich danach in welche Richtung Leistung bei den jeweiligen Verdichtermodulen transferiert werden soll (wenn nötig kein Leistungstransfer) und weiterhin nach den optimalen Drehzahlen der jeweiligen Verdichtermodule.

Im Folgenden wird die Erfindung anhand eines Ausführungsbeispiels in Verbindung mit der Zeichnung beschrieben. Dabei zeigt:
- Fig. 1: eine Darstellung einer erfindungsgemäßen Ausgestaltung einer Verdichtereinheit,
- Fig. 2: eine schematische Darstellung eines erfindungsgemäßen Ausführungsbeispiels der Verdichtereinheit, und
- Fig. 3: eine schematische Darstellung eines Ausführungsbeispiels eines erfindungsgemäßen variablen Getriebes.

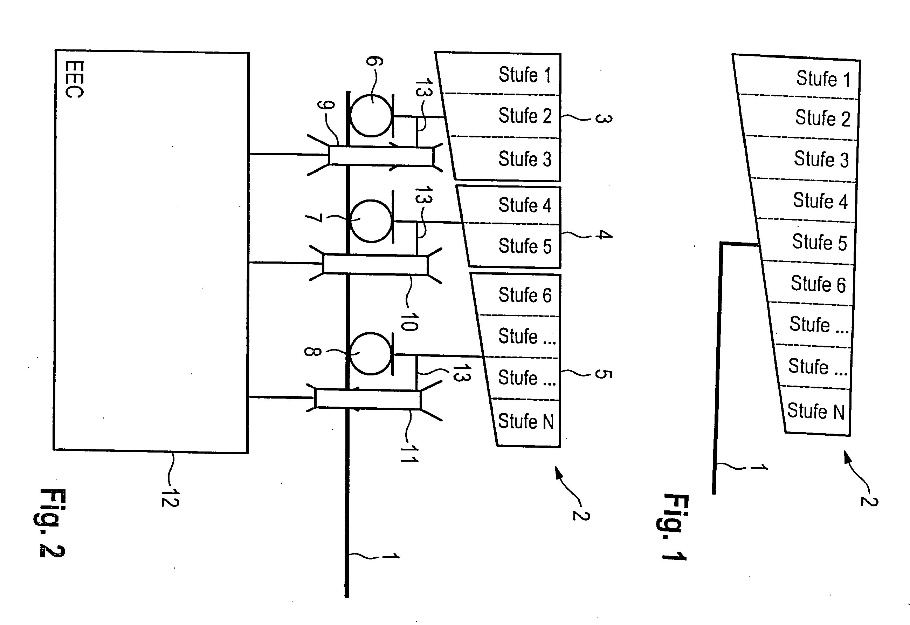

Die in Fig. 1 gezeigte Verdichtereinheit umfasst eine Antriebswelle 1, welche in bekannter Weise von einer Turbine oder Turbineneinheit einer Gasturbine in Drehung versetzt wird und welche mit den einzelnen Rotoren der Verdichtereinheit 2 fest verbunden ist. Die Verdichtereinheit 2 umfasst mehrere Stufen, so wie dies schematisch in Fig. 1 dargestellt ist.

Die Fig. 2 zeigt, dass die Verdichtereinheit 2 in einzelne Verdichtermodule 3, 4, 5 unterteilt ist. Diese umfassen jeweils unterschiedliche Verdichterstufen, die jeweils, analog zur Fig. 1, einen Rotor und einen Stator umfassen. Jeder Rotor und jeder Stator weist zumindest eine Reihe von Rotorschaufeln bzw. Statorschaufeln auf, so wie dies aus dem Stand der Technik ebenfalls bekannt ist.

Die Fig. 2 zeigt, dass die einzelnen Verdichtermodule 3, 4, 5 jeweils über Lagerelemente bzw. Lager 6, 7, 8 an der Antriebswelle 1 drehbar gelagert sind. Unabhängig von der Drehung der Antriebswelle können somit die Verdichtermodule 3, 4, 5 in Drehung versetzt werden oder eine Relativgeschwindigkeit zu der Antriebswelle 1 aufweisen. Die Lagerung ist nur schematisch dargestellt, es versteht sich, dass diese Lager sowohl eine axiale als auch eine radiale Lagerung umfassen.

Zwischen den Verdichtermodulen 3, 4, 5 und der Antriebswelle 1 ist jeweils ein variables Getriebe 9, 10, 11 zwischengeschaltet, welches elektrisch, hydraulisch, mechanisch oder in sonstiger Weise betätigt werden kann. Die Betätigung erfolgt über eine EEC (elektronische Steuerung der Gasturbine), welche optimale Drehzahlen und optimale Betriebszustände der einzelnen Verdichtermodule 3-5 berechnet. Somit ist es möglich, das variable Getriebe entweder in eine Neutralstellung oder einen Neutralgang zu schalten, bei welcher keine Kraftübertragung zwischen dem Verdichtermodul 3-5 und der Antriebswelle 1 erfolgt oder das variable Getriebe so zu schalten, dass eine Leistung von der Antriebswelle zum Verdichter übertragen wird oder es in der dritten Möglichkeit so zu schalten, dass eine Leistung vom Verdichter zur Antriebswelle übertragen wird. Durch die Verteilung der prozentualen Kraftübertragungen oder Drehmomentübertragungen ist somit eine Optimierung des modularen Verdichters möglich. Die einzelnen Verdichtermodule 3-5 laufen dabei mit unterschiedlichen Drehzahlen.

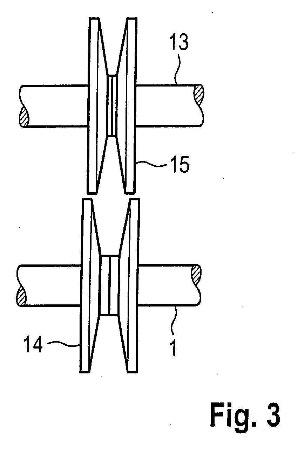

Das variable Getriebe kann als Planetengetriebe oder als Kettenscheibengetriebe mit Verstellkonus ausgebildet sein. Zu der letztgenannten Möglichkeit zeigt Fig. 3 ein schematisches Beispiel. Im Übrigen sind variable Getriebe aus dem Stand der Technik bekannt, so dass auf eine detaillierte Beschreibung an dieser Stelle verzichtet werden kann.

Die Fig. 3 zeigt schematisch eine Abtriebswelle 13 und eine Antriebswelle 1, auf welchen jeweils Kegelradsätze 14 und 15 drehfest gelagert sind. Die beiden Kegelräder jedes Kegelradsatzes 14 und 15 sind in ihrem axialen Abstand veränderbar, so dass ein im Einzelnen nicht dargestelltes umlaufendes Kettenelement jeweils in einer radial weiter innenliegenden oder einer radial außenliegenden Position gehalten wird. Hierdurch ist es möglich, das Übersetzungsverhältnis stufenlos und variabel zu ändern.

### Bezugszeichenliste

- 1: Antriebswelle
- 2: Verdichter / Verdichtereinheit
- 3-5: Verdichtermodul
- 6-8: Lager / Lagereinheit
- 9-11: variables Getriebe
- 12: EEC
- 13: Abtriebswelle
- 14-15: Kegelradsatz

## Patentansprüche

1. Gasturbine mit zumindest einer mehrstufigen Verdichtereinheit (2), wobei die Verdichtereinheit (2) aus einzelnen, unabhängigen Verdichtermodulen (3-5) aufgebaut ist, welche unabhängig voneinander drehbar auf einer Antriebswelle (1) gelagert sind und jeweils mittels eines variablen Getriebes (9-11) mit der Antriebswelle (1) gekoppelt ist.

2. Gasturbine nach Anspruch 1, **dadurch gekennzeichnet, dass** das variable Getriebe (9-11) ein variabel verstellbares Übersetzungs- bzw. Untersetzungsverhältnis aufweist.

3. Gasturbine nach Anspruch 1 oder 2, **dadurch gekennzeichnet, dass** die variablen Getriebe (9-11) unabhängig voneinander einstellbar sind.

4. Gasturbine nach einem der Ansprüche 1 bis 3, **dadurch gekennzeichnet, dass** das Verdichtermodul (3-5) eine Verdichterstufe mit einem mehrere Rotorschaufeln umfassenden Rotor und einem mehrere Statorschaufeln umfassenden Stator umfasst.

5. Gasturbine nach einem der Ansprüche 1 bis 4, **dadurch gekennzeichnet, dass** das Verdichtermodul (3-5) mehrere Verdichterstufen mit jeweils einem mehrere Rotorschaufeln umfassenden Rotor und mehrere, jeweils mehrere Statorschaufeln umfassenden Statoren umfasst.

6. Gasturbine nach einem der Ansprüche 1 bis 5, **dadurch gekennzeichnet, dass** die Verdichtereinheit (2) in Form eines Hochdruckverdichters ausgebildet ist.

7. Gasturbine nach einem der Ansprüche 1 bis 5, **dadurch gekennzeichnet, dass** die Verdichtereinheit (2) in Form eines Niederdruckverdichters ausgebildet ist.

8. Gasturbine nach einem der Ansprüche 1 bis 5, **dadurch gekennzeichnet, dass** die Verdichtereinheit (2) in Form eines Mitteldruckverdichters ausgebildet ist.
